# EUROPÄISCHE PATENTANMELDUNG

(11) **EP 1 296 115 A2**
(43) Veröffentlichungstag der Anmeldung: **26.03.2003**
(21) Anmeldenummer: 02016159.2
(22) Anmeldetag: 20.07.2002
(51) Int. Cl.: G01C 21/32, G09B 29/00

(54) **Verfahren und System zum Einteilen der Erdoberfläche**

(30) Priorität: 22.09.2001 DE 10146785
(71) Anmelder: ROBERT BOSCH GMBH, 70442 Stuttgart (DE)
(72) Erfinder: Barkowski, Andre, 38228 Salzgitter (DE); Schloegl, Dietmar, 31079 Sibbesse (DE)

(57) **Zusammenfassung**

Um ein Verfahren sowie ein System (100) zum Einteilen der Erdoberfläche so weiterzuentwickeln, daß die zugrunde liegenden Karteneinheiten (10) eine einfach handhabbare und klar definierte Struktur aufweisen, wird ein vorgegebenes Teilungsverhältnis vorgeschlagen, gemäß dem die zumindest annähernd gleichgroßen Karteneinheiten (10) ausgehend von der Äquatorlinie (30) als territoriale Abschnitte, Bereiche oder Gebiete ausgebildet werden,
- denen eine jeweils im wesentlichen gleichgroße Nord-Süd-Erstreckung zugeordnet wird und
- denen eine jeweils zumindest annähernd gleichgroße Ost-West-Erstreckung zugeordnet wird.

## Beschreibung

### Technisches Gebiet

Die vorliegende Erfindung betrifft ein Verfahren sowie ein System zum Einteilen der Erdoberfläche.

Allgemeiner betrifft die vorliegende Erfindung Navigationssysteme mit Kartendarstellung, und zwar unabhängig davon, ob die Darstellung des Straßennetzes in den Kartendaten enthalten ist oder aus einer Navigationsdatenbasis gewonnen werden muß.

### Stand der Technik

In Fortbewegungsmitteln, wie beispielsweise in Fahrzeugen, in Flugzeugen, in Kraftfahrzeugen oder in Schiffen, fest installierte Navigationssysteme leiten den Führer des Fortbewegungsmittels einfach, schnell und sicher vom aktuellen Standort zu einem gewünschten Zielort, ohne daß der Führer des Fortbewegungsmittels vorher aufwendig eine Route planen und entsprechendes Kartenmaterial erwerben muß.

Hierzu liegen entsprechende, etwa auf Karten, Landkarten oder Straßenkarten basierende Navigationsdaten beispielsweise auf CD-ROM (= Compact Disc-Read Only Memory) oder auf DVD (= Digital Versatile Disc) gespeichert vor.

Das Navigationssystem nutzt beispielsweise GPS (= Global Positioning System), um den momentanen Standort festzustellen und die entsprechenden Navigationsanweisungen zu berechnen, die zum vorbestimmten Ziel führen. Die Navigationsdaten beinhalten in diesem Zusammenhang vorzugsweise Daten über Straßen und Wege für Kraftfahrzeuge.

Bevor jedoch das Navigationssystem seine Aufgabe übernehmen und eine Route berechnen kann, ist es notwendig, daß das Navigationsgebiet in Form eines territorialen Ausschnitts, Bereichs oder Gebiets der Erdoberfläche in geeigneter Form dargestellt wird. Dies geschieht üblicherweise, indem ein aus Navigationsdaten des Navigationsgebiets und aus Umgebungsdaten des Navigationsgebiets zusammengesetzter Datensatz mit einer oder mehreren Karteneinheiten (sogenannten "Maps" oder "Hintergrund-Maps") hinterlegt wird.

Die Größe derartiger, in einzelne Kacheln unterteilbarer Hintergrund-Maps von Datensätzen richtet sich konventionellerweise nach der Größe des dem Datensatz zugrunde liegenden Straßennetzes. Die Aufteilung der Kacheln der Karteneinheit wird dann individuell auf die Abmessungen der Karteneinheit zugeschnitten.

Dies führt jedoch beim Zusammenführen von Datensätzen insofern zu Problemen, als sich die zu den Datensätzen gehörenden Karteneinheiten nicht überlappungsfrei zu einer (größeren) Karteneinheit zusammenfassen lassen. Dies bedeutet mit anderen Worten, daß Teile der Hintergrund-Map mehrfach vorhanden sind, so daß es für ein beliebiges Fenster nicht auf einfachem Wege möglich ist, die zugehörigen Kacheln anzugeben.

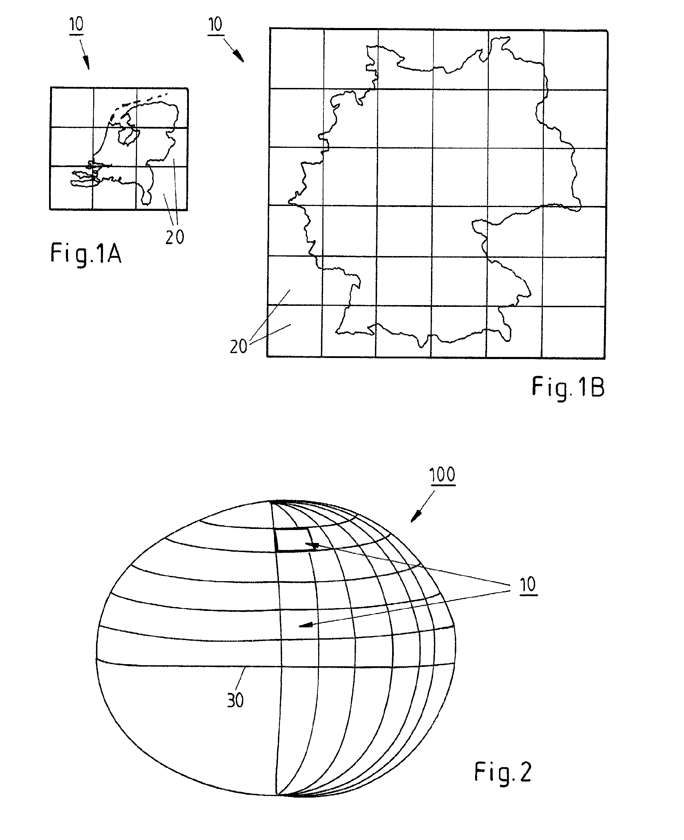

Deutlich sichtbar werden die vorgenannten Schwierigkeiten zum Beispiel beim derzeit noch gebräuchlichen Modell, bei dem für jeden Datensatz eine eigene Karteneinheit hergestellt wird, die das vom Datensatz abgedeckte Gebiet, etwa die Fläche eines Staates, mit einem Nord-Südorientierten Rechteck umschließt (vgl. Figur 1A für das Territorium der Niederlande und Figur 1B für das Territorium der Bundesrepublik Deutschland). Die Größe der Karteneinheit und ihre innere Aufteilung in Kacheln (vgl. die Figuren 1A und 1B) richten sich dabei nach der Form und nach der Ausdehnung der Fläche des jeweiligen Datensatzes.

Beim Zusammenführen mehrerer Datensätze ergibt sich ein kompliziertes Neben- und Übereinander sowohl von Karteneinheiten unterschiedlicher Größe und Kachelaufteilung als auch von Inhalten der Datensätze oder Umgebungsdateien. Dieses komplizierte Neben- und Übereinander ist nicht zuletzt für ein Online-Programm nicht mehr handzuhaben.

### Darstellung der Erfindung: Aufgabe, Lösung, Vorteile

Ausgehend von den vorstehend dargelegten Nachteilen und Unzulänglichkeiten liegt der vorliegenden Erfindung die Aufgabe zugrunde, ein Verfahren sowie ein System der eingangs genannten Art so weiterzuentwickeln, daß die zugrunde liegenden Karteneinheiten eine einfach handhabbare und klar definierte Struktur aufweisen.

Diese Aufgabe wird durch ein Verfahren mit den im Anspruch 1 angegebenen Merkmalen sowie durch ein System mit den im Anspruch 6 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Gemäß der Lehre der vorliegenden Erfindung wird "die Welt", das heißt die Erdoberfläche gemäß einem bestimmten Teilungsverhältnis in entsprechende, als sogenannte Karteneinheiten ausgeformte (Teil)Abschnitte, (Teil-)Bereiche oder (Teil-)Gebiete, vorzugsweise vom Äquator ausgehend und vorzugsweise nicht ganz bis zu den beiden Polen (= Nordpol und Südpol), unterteilt. Dies zeitigt den erfindungswesentlichen Vorteil, daß bei Vorgabe eines Standpunkts, beispielsweise durch GPS (= Global Positioning System), gemäß der Lehre des vorliegenden Verfahrens sowie des vorliegenden Systems angegeben werden kann, in welcher Kachel einer Karteneinheit zu suchen ist.

Hierzu werden die Flächen der Karteneinheiten zweckmäßigerweise in einer im wesentlichen einheitlichen Weise gewählt, und zwar sowohl was ihre Form als auch was ihre Dimensionierung anbelangt. In diesem Zusammenhang bietet sich insbesondere sogar eine weltweit einheitliche Aufteilung in Kartenflächen unabhängig von der Form und von der Größe der dargestellten Datensätze an, was zur Folge hat, daß ein Datensatz nicht mehr notwendigerweise durch eine einzige Karteneinheit repräsentiert wird.

In jedem Falle passen die Karteneinheiten verschiedener Datensätze erfindungsgemäß stets exakt zusammen und können daher in einfacher Weise "gemergt", das heißt zusammengeführt werden, wobei bei Wahl einer weltweit in etwa gleichen Mapgröße für alle Maps, das heißt für alle Karteneinheiten im wesentlichen derselbe innere Kachelaufbau zum Einsatz gelangen könnte.

Für weltweite Karteneinheiten bietet sich zweckmäßigerweise ein am WGS 84-Koordinatensystem (WGS 84 = World Geodetic System 1984 = weltweites geodätisches System 1984) orientiertes Gitter an, denn sowohl GPS (= Global Positioning System) als auch die Navigation selbst verwenden derartige Koordinaten. Singularitäten treten beim WGS 84-Koordinatensystem lediglich an den beiden Polen auf, wobei jedoch Navigationssysteme für private Landfahrzeuge dort auf absehbare Zeit wohl nicht zum Einsatz kommen werden. Zu bedenken ist in diesem Zusammenhang jedoch, daß die Karteneinheiten keine Rechtecke konstanter Winkelgröße sein können, denn die Meridiane rücken mit zunehmendem Abstand vom Äquator immer dichter zusammen.

Gemäß einer besonders erfinderischen Weiterbildung setzen sich die Karteneinheiten der einzelnen Datensätze aus Inhalten des jeweiligen Datensatzes sowie aus Inhalten der Umgebungsdaten zusammen. Die Umgebungsdaten sind in der Karteneinheit zwar auch für das Gebiet vorhanden, das durch den Datensatz abgedeckt wird; diese Umgebungsdaten werden aber vorteilhafterweise durch dieses Gebiet überlagert und sind aus diesem Grunde nur in den Bereichen sichtbar, die nicht durch den Datensatz ausgefüllt werden.

In zweckmäßiger Weise können die Karteneinheiten des Navigationsgebiets aus den Karteneinheiten der beteiligten Datensätze gebildet werden; hierbei sind die beteiligten Karteneinheiten des Navigationsgebiets vorzugsweise die Vereinigungsmenge aller Karteneinheiten der beteiligten Datensätze.

Die vorliegende Erfindung betrifft schließlich eine Navigationseinrichtung, arbeitend gemäß einem Verfahren der vorstehend dargelegten Art und/oder aufweisend mindestens ein System der vorstehend dargelegten Art.

### Kurze Beschreibung der Zeichnungen

Weitere Ausgestaltungen, Merkmale und Vorteile der vorliegenden Erfindung werden nachstehend anhand des durch die Figuren 1A bis 5B veranschaulichten Ausführungsbeispiels näher erläutert.

Es zeigt:
- Fig. 1A: eine konventionelle, am Stand der Technik orientierte Karteneinheit mit neun Kacheln für das Territorium der Niederlande;
- Fig. 1B: eine konventionelle, am Stand der Technik orientierte Karteneinheit mit 26 Kacheln für das Territorium der Bundesrepublik Deutschland;
- Fig. 2: in perspektivischer Darstellung die Unterteilung der Erdoberfläche in etwa gleichgroße Karteneinheiten (durch zwei Pfeile gekennzeichnet);
- Fig. 3A: in perspektivischer Darstellung die Unterteilung eines Ausschnitts, Bereichs oder Gebiets der Erdoberfläche in etwa gleichgroße Karteneinheiten;
- Fig. 3B: in ebener, das heißt "planarisierter" Darstellung die Unterteilung aus Fig. 3A;
- Fig. 4: die Unterteilung eines bestimmten Ausschnitts, Bereichs oder Gebiets der Erdoberfläche, nämlich des Territoriums von Mitteleuropa, in etwa gleichgroße Karteneinheiten;
- Fig. 5A: das Herstellen der Karteneinheiten der einzelnen Datensätze für das Territorium der Niederlande (vgl. Fig. 5A links) und für das Territorium der Bundesrepublik Deutschland (vgl. Fig. 5A rechts) unter Einbeziehung der Umgebungsdaten (vgl. Fig. 5A Mitte); und
- Fig. 5B: das Herstellen der drei zusammengeführten Karteneinheiten aus Fig. 5A.

Gleiche oder ähnliche Ausgestaltungen, Elemente oder Merkmale sind in den Figuren 1A bis 5B mit identischen Bezugszeichen versehen.

### Bester Weg zur Ausführung der Erfindung

Beim Verfahren sowie im System 100 gemäß der vorliegenden Erfindung wird die Weltkugel, das heißt die Erdoberfläche gemäß einem bestimmten Teilungsverhältnis vom Äquator ausgehend und nicht ganz bis zu den beiden Polen (= Nordpol und Südpol) in entsprechende Karteneinheiten 10 unterteilt. Hierdurch kann bei Vorgabe eines Standpunkts mittels GPS (= Global Positioning System) angegeben werden, in welcher Kachel 20 einer Karteneinheit 10 zu suchen ist.

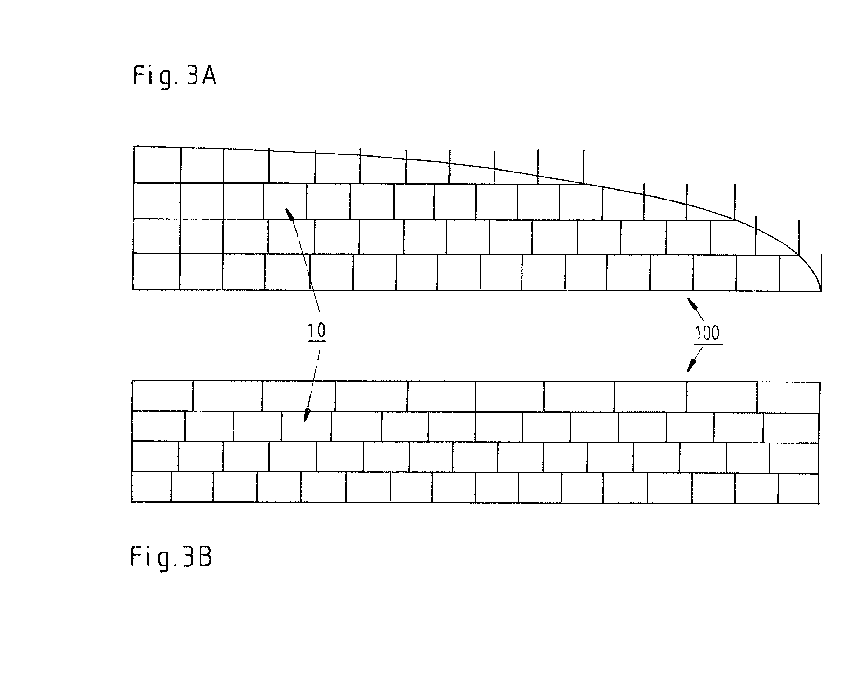

Im einzelnen wird die Erdoberfläche beginnend an der Äquatorlinie 30 in Abhängigkeit von der gewünschten Größe der Karteneinheiten 10 (im Ausführungsbeispiel gemäß den Figuren 2, 3A und 3B sind dies 2.500 Kilometer) in gleich breite West-Ost-Streifen geteilt, die wiederum durch Nord-Süd-Schnitte in annähernd gleich breite Rechtecke (sogenannte "Maps" = Karteneinheiten 10) zerteilt werden. Die Anzahl der Maps, in die jeder West-Ost-Streifen zerfällt, hängt von der jeweiligen geographischen Breite ab.

Im Ausführungsbeispiel gemäß den Figuren 3A und 3B ergibt sich die Anzahl der Maps, das heißt der Karteneinheiten 10 in vier auf der nördlichen Erdhalbkugel bis hin zum Nordpol vorgesehenen horizontalen Reihen oder Streifen zu zehn (= oberste Reihe in den Figuren 3A und 3B), zu vierzehn (= zweitoberste Reihe in den Figuren 3A und 3B), zu fünfzehn (= drittoberste Reihe in den Figuren 3A und 3B) bzw. zu sechzehn (= viertoberste Reihe in den Figuren 3A und 3B).

Die Nord-Süd-Abmessung der entstandenen Karteneinheiten 10 ist weltweit überall exakt gleich, die jeweilige West-Ost-Abmessung jedoch nur innerhalb eines Streifens. Jede Karteneinheit 10 kann in erfindungswesentlicher Weise durch ihre West-Ost-Lage und durch ihre Nord-Süd-Lage eindeutig adressiert werden.

Zwar erscheint die Position der einzelnen Karteneinheiten 10 zueinander auf den ersten Blick etwas unübersichtlich, es ist jedoch problemlos möglich, bei Kenntnis der Teilungstabelle für jeden Punkt die zugehörige Karteneinheit 10 gemäß einem bestimmten Teilungsalgorithmus zu berechnen; auch ist es ohne weiteres möglich, der Onlinesoftware der zugeordneten Navigationseinrichtung die Auswahl der benötigten Karteneinheiten 10 mittels einer Hilfstabelle zu erleichtern.

Die im Ausführungsbeispiel gemäß den Figuren 2, 3A und 3B mit 2.500 Kilometern gewählte Teilung der einzelnen Karteneinheiten 10 ist nach den Gegebenheiten von Bildschirmgröße und Darstellungsmaßstäben der zugeordneten Navigationseinrichtung so festzulegen, daß jeder Datensatz an maximal vier Karteneinheiten 10 beteiligt ist und daß die von den Karteneinheiten 10 eines Datensatzes abgedeckte Fläche nur so groß ist, wie es für diesen Datensatz allein erforderlich ist.

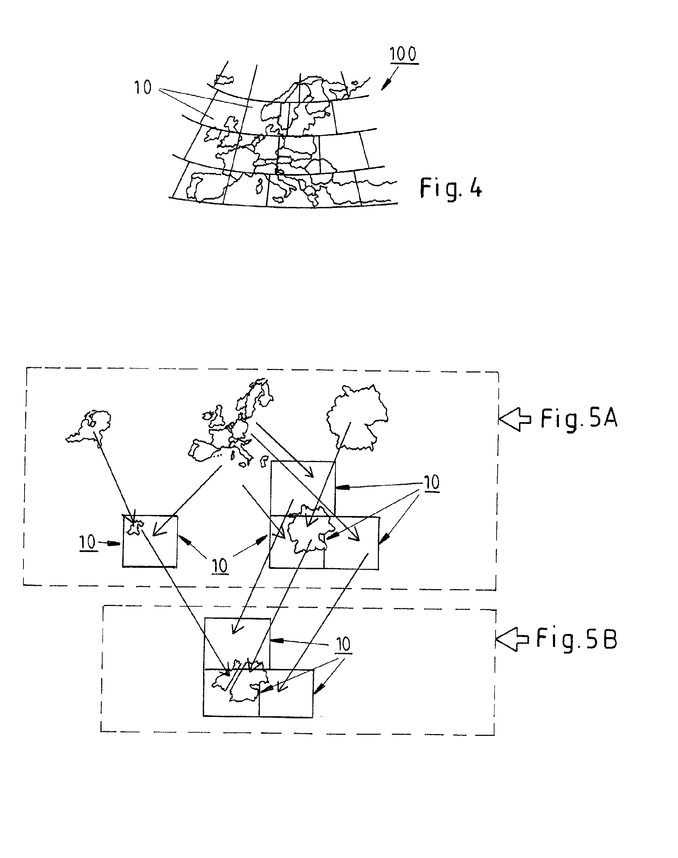

Anzumerken ist an dieser Stelle noch, daß für mitteleuropäische Daten aufgrund der hohen "Feature-" und daraus resultierenden Informationsdichte eine Mapgröße von etwa tausend Kilometern angemessen erscheint. Damit ergibt sich für Mitteleuropa in etwa die anhand Figur 4 veranschaulichte Map-Aufteilung der Karteneinheiten 10 und die nachfolgende Teilungstabelle:

| | | | | | | | | | |
|---|---|---|---|---|---|---|---|---|---|
| ϕ/° | 0 | 9,00 | 18,00 | 27,00 | 36,00 | 45,00 | 54,00 | 63,00 | 72,00 |
| Map | 40 | 39 | 38 | 35 | 32 | 28 | 23 | 18 | 12 |
| Δλ/° | 9,00 | 9,23 | 9,47 | 10,29 | 11,25 | 12,86 | 15,65 | 20,00 | 30,00 |

Abschließend sei an dieser Stelle angemerkt, daß das in der Darstellung der Figuren 5A und 5B angedeutete "Mergen" der Maps, das heißt das Zusammenführen der Karteneinheiten 10 einfacher wird, wenn die Karteneinheiten 10 der einzelnen Datensätze im vorbeschriebenen weltweit einheitlichen Raster erzeugt werden.

## Patentansprüche

1. Verfahren zum Einteilen der Erdoberfläche gemäß einem vorgegebenen Teilungsverhältnis in zumindest annähernd gleichgroße Karteneinheiten (10),
- die ausgehend von der Äquatorlinie (30) als territoriale Abschnitte, Bereiche oder Gebiete ausgebildet werden,
- denen eine jeweils im wesentlichen gleichgroße Nord-Süd-Erstreckung zugeordnet wird und
- denen eine jeweils zumindest annähernd gleichgroße Ost-West-Erstreckung zugeordnet wird.

2. Verfahren gemäß Anspruch 1, **dadurch gekennzeichnet, daß** jede Karteneinheit (10) durch ihre Nord-Süd-Position sowie durch ihre Ost-West-Position adressiert wird.

3. Verfahren gemäß Anspruch 1 oder 2, **dadurch gekennzeichnet, daß** einer oder mehreren Karteneinheiten (10) mindestens ein Datensatz
- aus Navigationsdaten mindestens eines in Form eines territorialen Ausschnitts oder Bereichs der Erdoberfläche darstellbaren Navigationsgebiets und/oder
- aus Umgebungsdaten des Navigationsgebiets zugeordnet wird.

4. Verfahren gemäß mindestens einem der Ansprüche 1 bis 3, **dadurch gekennzeichnet, daß** den Karteneinheiten (10) weitere Elemente mindestens einer Navigationsdatenbasis, wie etwa Points of Interest (POI), zugeführt werden.

5. Verfahren gemäß mindestens einem der Ansprüche 1 bis 4, **dadurch gekennzeichnet, daß** jede Karteneinheit (10) in mehrere Kacheln (20) unterteilt wird.

6. System (100) zum Einteilen der Erdoberfläche gemäß einem vorgegebenen Teilungsverhältnis in zumindest annähernd gleichgroße Karteneinheiten (10),
- die ausgehend von der Äquatorlinie (30) als territoriale Abschnitte, Bereiche oder Gebiete, insbesondere von viereckiger und im speziellen von im wesentlichen rechteckiger Form, ausgebildet sind,
- die eine jeweils im wesentlichen gleichgroße Nord-Süd-Erstreckung aufweisen und
- die eine jeweils zumindest annähernd gleichgroße Ost-West-Erstreckung aufweisen.

7. System gemäß Anspruch 6, **dadurch gekennzeichnet, daß** diejenigen Karteneinheiten (10), denen der gleiche Abstand von der Äquatorlinie (30) zugeordnet ist,
- eine jeweils identische Nord-Süd-Erstreckung sowie
- eine jeweils identische Ost-West-Erstreckung aufweisen.

8. System gemäß Anspruch 6 oder 7, **dadurch gekennzeichnet, daß** die Karteneinheiten (10) jeweils einen ähnlichen oder identischen inneren Kachelaufbau aufweisen.

9. System gemäß mindestens einem der Ansprüche 6 bis 8, **dadurch gekennzeichnet, daß** die Struktur der Karteneinheiten (10) im wesentlichen gemäß der Gitterstruktur des WGS 84-Koordinatensystems (WGS 84 = World Geodetic System 1984 = weltweites geodätisches System 1984) aufgebaut ist.

10. Navigationseinrichtung, arbeitend gemäß einem Verfahren gemäß mindestens einem der Ansprüche 1 bis 5 und/oder aufweisend mindestens ein System (100) gemäß mindestens einem der Ansprüche 6 bis 9.
